# FASCICULE DE BREVET EUROPEEN

(11) **EP 3 580 432 B1**
(45) Date de publication et mention de la délivrance du brevet: **07.07.2021**
(21) Numéro de dépôt: 18706797.0
(22) Date de dépôt: 06.02.2018
(51) Int. Cl.: F01D 25/16, F02C 7/06

(54) **TURBORÉACTEUR À ARCHITECTURE DE PALIERS OPTIMISÉE POUR LE SUPPORT D'UN ARBRE BASSE PRESSION**
STRAHLTURBINE MIT EINER ARCHITEKTUR AUS LAGERN, DIE ZUR STÜTZUNG EINER NIEDERDRUCKWELLE OPTIMIERT SIND
TURBOJET COMPRISING AN ARCHITECTURE OF BEARINGS OPTIMISED TO SUPPORT A LOW-PRESSURE SHAFT

(30) Priorité: 07.02.2017 FR 1700130
(43) Date de publication de la demande: 18.12.2019
(73) Titulaire: Safran Aircraft Engines, 75015 Paris (FR)
(72) Inventeur: BEAUJARD, Antoine, Jean-Philippe, 77550 Moissy-Cramayel (FR); BENYAMIN, Serge, 77550 Moissy-Cramayel (FR); BOUDEBIZA, Tewfik, 77550 Moissy-Cramayel (FR)
(74) Mandataire: Brevalex
(86) Numéro de dépôt international: PCT/FR2018/050287
(87) Numéro de publication internationale: WO 2018/146411

(56) Documents cités:
- EP-A2- 1 596 038
- FR-A- 1 527 370
- FR-A- 1 603 361
- FR-A1- 2 219 312

## Description

### DOMAINE TECHNIQUE

La présente invention se rapporte au domaine des turboréacteurs, notamment ceux destinés à la propulsion des aéronefs.

L'invention concerne plus particulièrement un turboréacteur à double corps, comprenant, de l'amont vers l'aval, un carter d'entrée, un compresseur basse pression, un corps haute pression, une turbine basse pression reliée au compresseur basse pression par un arbre basse pression, et un carter d'échappement, dans lequel le carter d'entrée et le compresseur basse pression définissent un canal d'entrée d'air du turboréacteur, qui se divise en aval du compresseur basse pression en un canal d'écoulement de flux primaire et en un canal d'écoulement de flux secondaire, et dans lequel l'arbre basse pression est supporté par un premier palier porté par le carter d'entrée, un deuxième palier porté par le carter intermédiaire, et un troisième palier porté par le carter d'échappement.

Dans un tel turboréacteur, le compresseur basse pression doit traiter tout le flux entrant dans le turboréacteur, dès lors que la division de ce flux entrant en un flux primaire et un flux secondaire s'opère en aval du compresseur basse pression. De plus, le compresseur basse pression opère à des vitesses relativement élevées, par exemple de l'ordre de 10000 tours par minute (RPM). Par conséquent, le compresseur basse pression est soumis à une charge aérodynamique particulièrement importante, et l'arbre basse pression présente des modes de flexion spécifiques. Les conditions de fonctionnement d'un tel turboréacteur sont ainsi éloignées de celles d'un turboréacteur à double flux comportant une soufflante en amont du compresseur basse pression et une division du flux entre la soufflante et le compresseur basse pression.

### ÉTAT DE LA TECHNIQUE ANTÉRIEURE

Un exemple particulier d'un turboréacteur à double corps et à double flux connu, du type ci-dessus, présente un faible taux de dilution, environ égal à 0,3, et une poussée maximale d'environ 5,5 tonnes (soit environ 55 kN).

Dans un turboréacteur de ce type, le premier palier est un palier à billes tandis que les deuxième et troisième paliers sont des paliers à rouleaux. De ce fait, la majorité des efforts axiaux sont repris par le premier palier, tandis que la majorité des efforts radiaux sont repris par le deuxième palier et le troisième palier.

Dans le cadre du développement d'un nouveau moteur, il est souhaitable de modifier ce turboréacteur connu de manière à augmenter considérablement son taux de dilution, sans réduire la valeur de sa poussée maximale. La valeur visée en ce qui concerne le taux de dilution est par exemple de 1,5 environ.

Pour permettre une telle augmentation du taux de dilution sans accroître considérablement l'encombrement radial et axial du turboréacteur, il est souhaitable d'accroître le diamètre extérieur du carter d'entrée, tout en minimisant le rapport de moyeu de ce carter d'entrée, par exemple en maintenant le diamètre du moyeu du carter d'entrée sensiblement inchangé.

Or, l'accroissement du diamètre extérieur du carter d'entrée implique un accroissement des dimensions axiale et radiale du compresseur basse pression, d'où il résulte notamment une augmentation des efforts aérodynamiques axiaux appliqués au rotor du compresseur basse pression, nécessitant un accroissement des dimensions du premier palier censé reprendre ces efforts axiaux.

La minimisation du rapport de moyeu du carter d'entrée, au sein duquel est logé le premier palier, ne permet toutefois pas un tel accroissement des dimensions du premier palier.

Un autre turboréacteur selon l'état de la technique est divulgué dans FR 2 219 312.

### EXPOSÉ DE L'INVENTION

L'invention a notamment pour but d'apporter une solution simple, économique et efficace à ce problème.

Plus généralement, l'invention a pour but de permettre de maximiser la section efficace d'un carter d'entrée de turboréacteur à double corps.

L'invention propose à cet effet un turboréacteur à double corps selon la revendication 1, le turboréacteur à double corps, comprenant, de l'amont vers l'aval, un carter d'entrée, un compresseur basse pression, un corps haute pression, une turbine basse pression, et un carter d'échappement, dans lequel le compresseur basse pression comporte un rotor de compresseur basse pression, et la turbine basse pression comporte un rotor de turbine basse pression relié au rotor de compresseur basse pression par un arbre basse pression, dans lequel le carter d'entrée et le compresseur basse pression définissent un canal d'entrée d'air du turboréacteur, qui se divise en aval du compresseur basse pression en un canal d'écoulement de flux primaire passant au travers du corps haute pression, et en un canal d'écoulement de flux secondaire s'étendant autour du canal d'écoulement de flux primaire, et dans lequel l'arbre basse pression est supporté par un premier palier porté par le carter d'entrée, un deuxième palier porté par le carter intermédiaire, et un troisième palier porté par le carter d'échappement.

Selon l'invention, l'arbre basse pression est en outre supporté par un palier additionnel porté par le carter intermédiaire et agencé entre le premier palier et le deuxième palier, et le premier palier est un palier à rouleaux et le palier additionnel est un palier à billes.

Du fait que le palier additionnel est agencé en aval du premier palier, le volume disponible pour ce palier additionnel est supérieur au volume disponible pour le premier palier. Le palier additionnel peut ainsi être de dimensions supérieures à celles du premier palier d'un turboréacteur du type connu décrit ci-dessus, et peut par là-même supporter un niveau d'efforts axiaux supérieur tel que le niveau des efforts axiaux appliqués à l'arbre basse pression du fait d'un accroissement du diamètre extérieur du carter d'entrée.

De plus, les efforts axiaux étant majoritairement repris par le palier additionnel, l'invention permet d'utiliser, en tant que premier palier, un palier à rouleaux. Un tel palier, même en étant de dimensions modérées, permet une reprise efficace des efforts radiaux au niveau de l'extrémité amont de l'arbre basse pression.

De manière facultative, le turboréacteur peut comporter une ou plusieurs des caractéristiques préférentielles suivantes:
- le premier palier est agencé au niveau d'une extrémité amont de l'arbre basse pression ;
- le premier palier est agencé radialement en regard du carter d'entrée ;
- le deuxième palier est un palier à rouleaux ;
- le deuxième palier est agencé radialement en regard du carter intermédiaire ;
- le deuxième palier est agencé radialement en regard d'une jonction entre le compresseur basse pression et le carter intermédiaire ;
- le troisième palier est un palier à rouleaux ;
- le palier additionnel est agencé radialement en regard du compresseur basse pression ;
- le corps haute pression comporte un compresseur haute pression et une turbine haute pression agencée en aval du compresseur haute pression ;
- le compresseur haute pression comporte un rotor de compresseur haute pression, et la turbine haute pression comporte un rotor de turbine haute pression relié au rotor de compresseur haute pression par un arbre haute pression ;
- l'arbre haute pression est supporté par un quatrième palier porté par le carter intermédiaire et un cinquième palier interposé entre l'arbre haute pression et l'arbre basse pression et agencé en aval du quatrième palier et en amont du troisième palier ;
- le quatrième palier est un palier à billes ;
- le cinquième palier est un palier à rouleaux.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe axiale d'un turboréacteur à double corps et à double flux d'un type connu ;
- la figure 2 est une demi-vue schématique en coupe axiale du turboréacteur de la figure 1, illustrant l'agencement des paliers des arbres haute pression et basse pression du turboréacteur;
- la figure 3 est une vue semblable à la figure 2, illustrant un turboréacteur à double corps et à double flux selon l'invention.

Dans l'ensemble de ces figures, des références identiques peuvent désigner des éléments identiques ou analogues.

### EXPOSÉ DÉTAILLÉ D'UN MODE DE RÉALISATION PRÉFÉRÉ

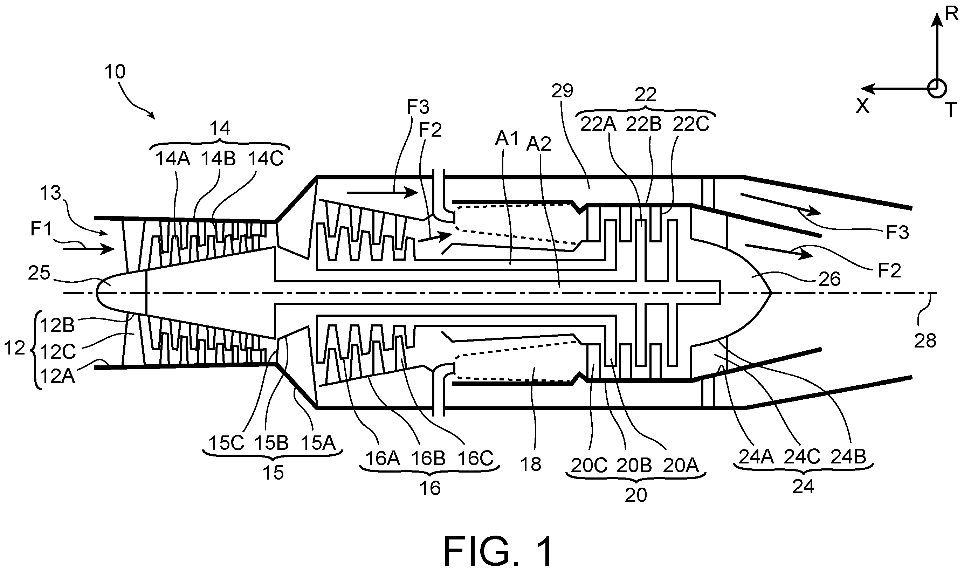

La figure 1 illustre un turboréacteur 10 à double corps et double flux destiné à la propulsion d'un aéronef, et comprenant de manière générale, de l'amont vers l'aval, un carter d'entrée 12 délimitant une entrée d'air 13 du turboréacteur, un compresseur basse pression 14, un carter intermédiaire 15, un compresseur haute pression 16, une chambre de combustion 18, une turbine haute pression 20, une turbine basse pression 22, et un carter d'échappement 24. Le compresseur basse pression 14 et la turbine basse pression 22 forment un corps basse pression, tandis que le compresseur haute pression 16 et la turbine haute pression 20 forment un corps haute pression. Les carters d'entrée 12, intermédiaire 15 et d'échappement 24 constituent les éléments structuraux du turboréacteur 10 par lesquels transitent les efforts des corps haute pression et basse pression vers une cellule d'aéronef.

Le carter d'entrée 12 comporte une virole extérieure 12A, une virole intérieure 12B formant le moyeu du carter d'entrée, et un distributeur 12C, c'est-à-dire une rangée annulaire d'aubes fixes, reliant les viroles l'une à l'autre. La virole intérieure est prolongée vers l'amont par un cône d'entrée 25 statorique.

Le carter intermédiaire 15 comporte une virole extérieure 15A, une virole intérieure 15B formant le moyeu du carter intermédiaire, et des bras structuraux 15C reliant les viroles l'une à l'autre.

De manière analogue, le carter d'échappement 24 comporte une virole extérieure 24A, une virole intérieure 24B formant le moyeu du carter d'échappement, et des bras structuraux 24C reliant les viroles l'une à l'autre. La virole intérieure 24B est prolongée vers l'aval par un cône d'échappement 26.

De manière bien connue, le compresseur basse pression 14 comporte un rotor 14A formé de plusieurs roues aubagées, et un stator comprenant un carter de compresseur basse pression 14B et des redresseurs 14C reliés à ce carter.

De manière analogue, le compresseur haute pression 16 comporte un rotor 16A formé de plusieurs roues aubagées, et un stator comprenant un carter de compresseur haute pression 16B et des redresseurs 16C reliés à ce carter 16B.

La turbine haute pression 20 comporte un rotor 20A formé d'une roue aubagée, et un stator comprenant un carter de turbine haute pression 20B et un distributeur 20C relié à ce carter 20B.

Enfin, la turbine basse pression 22 comporte un rotor 22A formé de deux roues aubagées, et un stator comprenant un carter de turbine basse pression 22B et deux distributeurs 22C reliés à ce carter 22B.

Le nombre de roues aubagées des compresseurs 14 et 16 et des turbines 20 et 22 est bien entendu donné uniquement à titre illustratif et peut varier sans sortir du cadre de la présente invention.

Les rotors du turboréacteur sont montés rotatifs autour d'un axe longitudinal 28 du turboréacteur. Le rotor 20A de la turbine haute pression 20 entraîne en rotation le rotor 16A du compresseur haute pression 16 par l'intermédiaire d'un arbre A1 appelé arbre haute pression, tandis que le rotor 22A de la turbine basse pression 22 entraîne en rotation le rotor 14A du compresseur basse pression 14 par l'intermédiaire d'un autre arbre A2 appelé arbre basse pression. Les arbres A1 et A2 sont centrés sur l'axe longitudinal 28, l'arbre haute pression A1 s'étendant autour de l'arbre basse pression A2, de manière bien connue.

Dans l'ensemble de cette description, la direction axiale ou longitudinale X est la direction de l'axe longitudinal 28 du turboréacteur. De plus, la direction radiale R et la direction circonférentielle ou tangentielle T sont définies par référence à un système de coordonnées cylindrique centré sur l'axe longitudinal 28. Enfin, les directions « amont » et « aval » sont définies par référence à l'écoulement général des gaz dans le turboréacteur selon la direction axiale X.

Le carter d'entrée 12 et le compresseur basse pression 14 définissent un canal d'entrée d'air du turboréacteur, qui se divise en aval en un canal d'écoulement de flux primaire défini par le compresseur haute pression 16, la chambre de combustion 18, et les turbines 20 et 22, et en un canal d'écoulement de flux secondaire 29 s'étendant autour du canal d'écoulement de flux primaire.

De manière bien connue, le canal d'entrée d'air et le canal d'écoulement de flux primaire sont délimités intérieurement par une enveloppe annulaire formée notamment du cône d'entrée 25, des viroles intérieures 12B, 15B et 24B des carters d'entrée, intermédiaire et d'échappement, de plateformes annulaires intérieures (non visibles sur les figures) des roues aubagées des rotors 14A, 16A, 20A, et 22A, et de viroles intérieures (non visibles sur les figures) des redresseurs 14C, 16C et des distributeurs 20C et 22C.

Ainsi, en fonctionnement, l'air F1 qui est entré par l'entrée d'air 13 et qui a été comprimé par le compresseur basse pression 14, se divise ensuite en un flux primaire F2 qui circule dans le canal d'écoulement de flux primaire, et en un flux secondaire F3 qui circule dans le canal d'écoulement de flux secondaire 29. Le flux primaire F2 est ainsi comprimé davantage dans le compresseur haute pression 16, puis mélangé à du carburant et enflammé dans la chambre de combustion 18, avant de subir une détente dans la turbine haute pression 20 puis dans la turbine basse pression 22, puis de s'échapper par le canal d'échappement 25. Le flux secondaire F3 contourne le canal d'écoulement de flux primaire et génère une poussée additionnelle en sortie du turboréacteur.

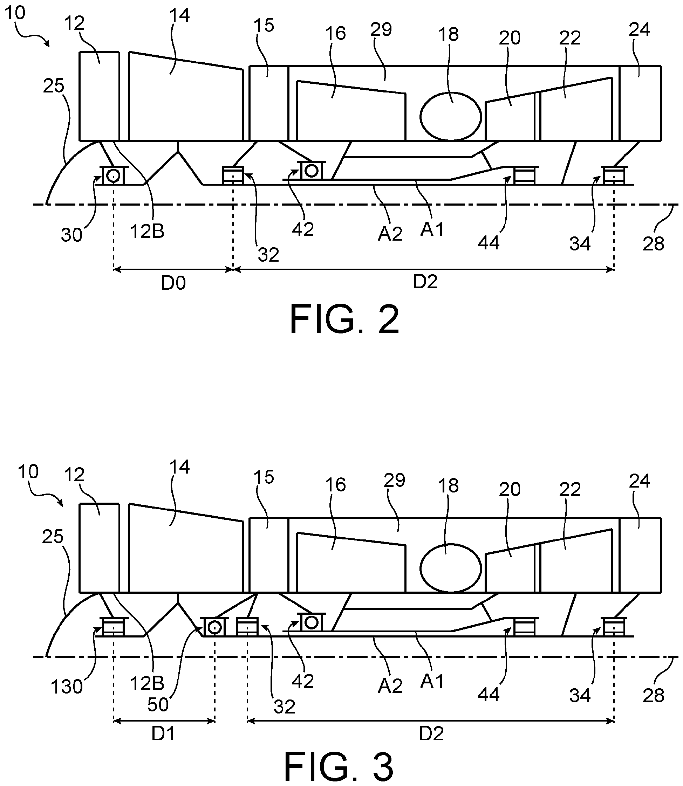

La figure 2 illustre schématiquement l'architecture du turboréacteur 10 dans le cas où ce turboréacteur est du type connu décrit ci-dessus.

Ainsi, l'arbre basse pression A2 est supporté par un premier palier 30 porté par le carter d'entrée 12, un deuxième palier 32 porté par le carter intermédiaire 15, et un troisième palier 34 porté par le carter d'échappement 24. De plus, le premier palier 30 est un palier à billes tandis que les deuxième et troisième paliers 32, 34 sont des paliers à rouleaux. Ces paliers 30, 32 et 34 sont bien entendu logés dans l'enveloppe annulaire précitée. Plus précisément, les paliers sont en général logés dans des enceintes de lubrification respectives, qui sont elles-mêmes logées dans l'enveloppe annulaire précitée.

Le premier palier 30 est agencé au niveau d'une extrémité amont de l'arbre basse pression A2, radialement en regard du carter d'entrée 12 et/ou d'une extrémité amont du compresseur basse pression 14. Le troisième palier 34 est agencé au niveau d'une extrémité aval de l'arbre basse pression A2, radialement en regard du carter d'échappement 24 et/ou d'une extrémité aval de la turbine basse pression 22. Enfin, le deuxième palier 32 est agencé axialement entre le premier palier 30 et le troisième palier 34, radialement en regard du compresseur basse pression 14 et/ou du carter intermédiaire 15.

Par ailleurs, l'arbre haute pression A1 est supporté par un quatrième palier 42 porté par le carter intermédiaire 15 et un cinquième palier 44 interposé entre l'arbre haute pression A1 et l'arbre basse pression A2 et agencé en aval du quatrième palier et en amont du troisième palier. Ces paliers 42 et 44 sont bien entendu aussi logés dans l'enveloppe annulaire précitée, ou plus précisément, dans des enceintes de lubrification respectives qui sont elles-mêmes logées dans l'enveloppe annulaire précitée. Le quatrième palier 42 est un palier à billes agencé radialement en regard du compresseur haute pression 16, tandis que le cinquième palier 44 est un palier à rouleaux agencé axialement entre les turbines haute pression 20 et basse pression 22.

Comme expliqué ci-dessus, un but de l'invention est de permettre une augmentation du taux de dilution du turboréacteur 10 sans accroître considérablement l'encombrement radial et axial de ce turboréacteur.

À cette fin, il est souhaitable d'accroître le diamètre extérieur du carter d'entrée 12, tout en minimisant le rapport de moyeu de ce carter d'entrée 12, c'est-à-dire le rapport entre le diamètre de la virole intérieure 12B et le diamètre de la virole extérieure 12A, par exemple en maintenant le diamètre de la virole intérieure 12B sensiblement inchangé.

Comme expliqué ci-dessus, l'accroissement du diamètre extérieur du carter d'entrée 12 implique un accroissement des dimensions axiale et radiale du compresseur basse pression 14, et par conséquent, une augmentation des efforts aérodynamiques axiaux appliqués au rotor 14A du compresseur basse pression 14, et donc à l'arbre basse pression A2. Une telle augmentation des efforts aérodynamiques axiaux requiert un accroissement des dimensions du premier palier censé reprendre ces efforts axiaux.

Or, la minimisation du rapport de moyeu du carter d'entrée, au sein duquel est logé le premier palier, ne permet pas un tel accroissement des dimensions du premier palier.

De plus, l'accroissement des dimensions du compresseur basse pression 14 implique également une augmentation des efforts radiaux appliqués par le compresseur basse pression à une partie avant de l'arbre basse pression A2, située en regard du compresseur basse pression.

La figure 3 illustre schématiquement une architecture du turboréacteur 10 modifiée conformément à l'invention de manière à résoudre le problème technique exposé ci-dessus.

Dans ce turboréacteur 10 selon l'invention, l'arbre basse pression A2 est en outre supporté par un palier additionnel 50 porté par le carter intermédiaire 15 et agencé entre le premier palier 130 et le deuxième palier 32.

Ce palier additionnel 50 est un palier à billes, et permet ainsi d'assurer la reprise de la majorité des efforts axiaux appliqués à l'arbre basse pression A2, et de manière secondaire, la reprise d'efforts radiaux appliqués à cet arbre basse pression.

Du fait que ce palier additionnel 50 est agencé en aval du premier palier 130, de préférence radialement en regard du compresseur basse pression, le volume disponible pour ce palier additionnel 50 est supérieur au volume disponible pour le premier palier 130. Le palier additionnel 50 peut ainsi être de dimensions supérieures à celles du premier palier du turboréacteur connu de la figure 2, et supporter ainsi le niveau supérieur d'efforts axiaux appliqués à l'arbre basse pression A2 du fait de l'accroissement du diamètre extérieur du carter d'entrée 12.

De plus, les efforts axiaux étant majoritairement repris par le palier additionnel 50, le premier palier 130 est, selon l'invention, un palier à rouleaux. Un tel palier, même en étant de dimensions modérées, permet une reprise efficace des efforts radiaux au niveau de l'extrémité amont de l'arbre basse pression A2.

En outre, les efforts radiaux dans la partie avant de l'arbre basse pression A2 sont repris plus efficacement par le premier palier 130 et le palier additionnel 50 que dans le turboréacteur connu de la figure 2, du fait que la distance axiale D1 entre le premier palier 130 et le palier additionnel 50 est réduite par rapport à la distance axiale D0 entre le premier palier 30 et le deuxième palier 32 du turboréacteur de la figure 2. Le premier palier 130 et le palier additionnel 50 permettent ainsi de supporter l'augmentation de ces efforts radiaux induite par l'accroissement des dimensions du compresseur basse pression.

Compte-tenu de la présence du palier additionnel 50, le deuxième palier 32 est éventuellement décalé vers l'aval par rapport à sa position dans le turboréacteur connu de la figure 2. Le deuxième palier 32 peut ainsi être agencé radialement en regard du carter intermédiaire 15, ou en regard de la jonction entre le compresseur basse pression 14 et le carter intermédiaire 15 comme le montre très schématiquement la figure 3. Dans tous les cas, l'invention permet d'éviter un accroissement de la distance axiale D2 entre le deuxième palier 32 et le troisième palier 34, qui serait préjudiciable au bon fonctionnement du turboréacteur. En effet, un accroissement de cette distance axiale aurait pour effet de réduire la fréquence du premier mode propre de flexion de l'arbre basse pression A2, au risque que cette fréquence tombe dans la plage de fonctionnement du turboréacteur, auquel cas le turboréacteur ne satisferait plus les exigences selon lesquelles la fréquence du premier mode propre doit être supérieure à 120% de la fréquence correspondant au régime maximal prévu pour l'arbre basse pression en fonctionnement normal (couramment dénommé « redline »).

Dans le cas particulier illustré ici, dans lequel le turboréacteur comporte un palier inter-arbres tel que le cinquième palier 44 décrit ci-dessus, une attention particulière doit être apportée aux modes propres de flexion car l'arbre haute pression est susceptible d'exciter l'arbre basse pression à certaines fréquences de rotation. L'avantage procuré par l'invention est dans ce cas d'autant plus considérable.

Il est à noter que, dans le mode de réalisation préféré de l'invention, les paliers décrits ci-dessus sont les seuls paliers du turboréacteur assurant le guidage et le centrage des arbres haute pression et basse pression.

## Revendications

1. Turboréacteur à double corps (10), comprenant, de l'amont vers l'aval, un carter d'entrée (12), un compresseur basse pression (14), un carter intermédiaire (15), un corps haute pression, une turbine basse pression (22), et un carter d'échappement (24),
dans lequel le compresseur basse pression (14) comporte un rotor de compresseur basse pression (14A), et la turbine basse pression (22) comporte un rotor de turbine basse pression (22A) relié au rotor de compresseur basse pression par un arbre basse pression (A2),
dans lequel le carter d'entrée (12) comporte une virole extérieure (12A), une virole intérieure (12B) formant un moyeu du carter d'entrée, et une rangée annulaire d'aubes fixes (12C) reliant les viroles extérieure (12A) et intérieure (12B) l'une à l'autre,
dans lequel le carter intermédiaire (15) comporte une virole extérieure (15A), une virole intérieure (15B) formant un moyeu du carter intermédiaire, et des bras structuraux (15C) reliant les viroles extérieure (15A) et intérieure (15B) l'une à l'autre,
dans lequel le carter d'échappement (24) comporte une virole extérieure (24A), une virole intérieure (24B) formant un moyeu du carter d'échappement, et des bras structuraux (24C) reliant les viroles extérieure (24A) et intérieure (24B) l'une à l'autre, dans lequel le carter d'entrée (12) et le compresseur basse pression (14) définissent un canal d'entrée d'air du turboréacteur, qui se divise en aval du compresseur basse pression (14) en un canal d'écoulement de flux primaire passant au travers du corps haute pression, et en un canal d'écoulement de flux secondaire (29) s'étendant autour du canal d'écoulement de flux primaire,
et dans lequel l'arbre basse pression (A2) est supporté par :
- un premier palier (130) porté par le carter d'entrée (12), le premier palier (130) étant un palier à rouleaux,
- un deuxième palier (32) porté par le carter intermédiaire (15), et
- un troisième palier (34) porté par le carter d'échappement (24),
**caractérisé en ce que** l'arbre basse pression (A2) est en outre supporté par un palier additionnel (50) porté par le carter intermédiaire (15) et agencé entre le premier palier (130) et le deuxième palier (32),
et **en ce que** le palier additionnel (50) est un palier à billes.

2. Turboréacteur selon la revendication 1, dans lequel le premier palier (130) est agencé au niveau d'une extrémité amont de l'arbre basse pression (A2).

3. Turboréacteur selon la revendication 1 ou 2, dans lequel le premier palier (130) est agencé radialement en regard du carter d'entrée (12).

4. Turboréacteur selon l'une quelconque des revendications 1 à 3, dans lequel le premier palier (130) est agencé radialement en regard d'une extrémité amont du compresseur basse pression (14).

5. Turboréacteur selon l'une quelconque des revendications 1 à 4, dans lequel le deuxième palier (32) est un palier à rouleaux.

6. Turboréacteur selon l'une quelconque des revendications 1 à 5, dans lequel le deuxième palier (32) est agencé radialement en regard du carter intermédiaire (15).

7. Turboréacteur selon l'une quelconque des revendications 1 à 6, dans lequel le deuxième palier (32) est agencé radialement en regard d'une jonction entre le compresseur basse pression (14) et le carter intermédiaire (15).

8. Turboréacteur selon l'une quelconque des revendications 1 à 7, dans lequel le troisième palier (34) est un palier à rouleaux.

9. Turboréacteur selon l'une quelconque des revendications 1 à 8, dans lequel le palier additionnel (50) est agencé radialement en regard du compresseur basse pression (14).

10. Turboréacteur selon l'une quelconque des revendications 1 à 9, dans lequel le corps haute pression comporte un compresseur haute pression (16) et une turbine haute pression (20) agencée en aval du compresseur haute pression (16),
dans lequel le compresseur haute pression (16) comporte un rotor de compresseur haute pression (16A), et la turbine haute pression (20) comporte un rotor de turbine haute pression (20A) relié au rotor de compresseur haute pression par un arbre haute pression (A1),
et dans lequel l'arbre haute pression (A1) est supporté par un quatrième palier (42) porté par le carter intermédiaire (15) et un cinquième palier (44) interposé entre l'arbre haute pression (A1) et l'arbre basse pression (A2) et agencé en aval du quatrième palier (42) et en amont du troisième palier (34).

11. Turboréacteur selon la revendication 10, dans lequel le quatrième palier (42) est un palier à billes.

12. Turboréacteur selon la revendication 10 ou 11, dans lequel le cinquième palier (44) est un palier à rouleaux.

## Patentansprüche

1. Zweigehäusige Strahlturbine (10), welche von stromaufwärts nach stromabwärts ein Einlassgehäuse (12), einen Niederdruckkompressor (14), ein Zwischengehäuse (15), ein Hochdruckgehäuse, eine Niederdruckturbine (22) sowie ein Auslassgehäuse (24) umfasst,
wobei der Niederdruckkompressor (14) einen Niederdruckkompressor-Rotor (14A) aufweist und die Niederdruckturbine (22) einen Niederdruckturbinen-Rotor (22A) aufweist, der über eine Niederdruckwelle (A2) mit dem Niederdruckkompressor-Rotor verbunden ist,
wobei das Einlassgehäuse (12) einen Außenring (12A), einen eine Nabe des Einlassgehäuses bildenden Innenring (12B) sowie eine ringförmige Reihe von feststehenden Schaufeln (12C) aufweist, die den Außen- (12A) und den Innenring (12B) miteinander verbinden,
wobei das Zwischengehäuse (15) einen Außenring (15A), einen eine Nabe des Zwischengehäuses bildenden Innenring (15B) sowie strukturelle Arme (15C) aufweist, die den Außen- (15A) und den Innenring (15B) miteinander verbinden,
wobei das Auslassgehäuse (24) einen Außenring (24A), einen eine Nabe des Auslassgehäuses bildenden Innenring (24B) sowie strukturelle Arme (24C) aufweist, die den Außen- (24A) und den Innenring (24B) miteinander verbinden,
wobei das Einlassgehäuse (12) und der Niederdruckkompressor (14) einen Lufteinlasskanal der Strahlturbine definieren, welcher sich stromabwärts des Niederdruckkompressors (14) in einen Abflusskanal des Primärstroms, der durch das Hochdruckgehäuse fließt, und einen Abflusskanal des Sekundärstroms (29) teilt, der sich um den Abflusskanal des Primärstroms herum erstreckt,
und wobei die Niederdruckwelle (A2) durch:
- ein von dem Einlassgehäuse (12) getragenes erstes Lager (130), wobei das erste Lager (130) ein Rollenlager ist,
- ein von dem Zwischengehäuse (15) getragenes zweites Lager (32) und
- ein von dem Auslassgehäuse (24) getragenes drittes Lager (34)
gestützt wird,
**dadurch gekennzeichnet, dass** die Niederdruckwelle (A2) außerdem durch ein zusätzliches Lager (50) gestützt wird, das von dem Zwischengehäuse (15) getragen wird und zwischen dem ersten Lager (130) und dem zweiten Lager (32) angeordnet ist, sowie dass das zusätzliche Lager (50) ein Kugellager ist.

2. Strahlturbine nach Anspruch 1, wobei das erste Lager (130) auf der Höhe eines Endes stromaufwärts der Niederdruckwelle (A2) angeordnet ist.

3. Strahlturbine nach Anspruch 1 oder 2, wobei das erste Lager (130) radial gegenüber dem Einlassgehäuse (12) angeordnet ist.

4. Strahlturbine nach einem der Ansprüche 1 bis 3, wobei das erste Lager (130) radial gegenüber einem Ende stromaufwärts des Niederdruckkompressors (14) angeordnet ist.

5. Strahlturbine nach einem der Ansprüche 1 bis 4, wobei das zweite Lager (32) ein Rollenlager ist.

6. Strahlturbine nach einem der Ansprüche 1 bis 5, wobei das zweite Lager (32) radial gegenüber dem Zwischengehäuse (15) angeordnet ist.

7. Strahlturbine nach einem der Ansprüche 1 bis 6, wobei das zweite Lager (32) radial gegenüber einer Verbindung zwischen dem Niederdruckkompressor (14) und dem Zwischengehäuse (15) angeordnet ist.

8. Strahlturbine nach einem der Ansprüche 1 bis 7, wobei das dritte Lager (34) ein Rollenlager ist.

9. Strahlturbine nach einem der Ansprüche 1 bis 8, wobei das zusätzliche Lager (50) radial gegenüber dem Niederdruckkompressor (14) angeordnet ist.

10. Strahlturbine nach einem der Ansprüche 1 bis 9, wobei das Hochdruckgehäuse einen Hochdruckkompressor (16) und eine Hochdruckturbine (20) aufweist, die stromabwärts des Hochdruckkompressors (16) angeordnet ist,
wobei der Hochdruckkompressor (16) einen Hochdruckkompressor-Rotor (16A) aufweist und die Hochdruckturbine (20) einen Hochdruckturbinen-Rotor (20A) aufweist, der mit dem Hochdruckkompressor-Rotor über eine Hochdruckwelle (A1) verbunden ist,
und wobei die Hochdruckwelle (A1) durch ein von dem Zwischengehäuse (15) getragenes viertes Lager (42) sowie ein fünftes Lager (44) gestützt wird, welches zwischen der Hochdruckwelle (A1) und der Niederdruckwelle (A2) angebracht und stromabwärts des vierten Lagers (42) sowie stromaufwärts des dritten Lagers (34) angeordnet ist.

11. Strahlturbine nach Anspruch 10, wobei das vierte Lager (42) ein Kugellager ist.

12. Strahlturbine nach Anspruch 10 oder 11, wobei das fünfte Lager (44) ein Rollenlager ist.

## Claims

1. Twin spool turbojet (10), including, from upstream to downstream, an inlet casing (12), a low pressure compressor (14), an intermediate casing (15), a high pressure spool, a low pressure turbine (22), and an exhaust casing (24),
in which the low pressure compressor (14) comprises a low pressure compressor rotor (14A), and the low pressure turbine (22) comprises a low pressure turbine rotor (22A) connected to the low pressure compressor rotor by a low pressure shaft (A2),
wherein the inlet casing (12) comprises an outer shell (12A), an inner shell (12B) defining a hub of the inlet casing, and an annular row of vanes (12C) connecting together the outer (12A) and inner (12B) shells of the inlet casing (12),
wherein the intermediate casing (15) comprises an outer shell (15A), an inner shell (15B) defining a hub of the intermediate casing, and structural arms (15C) connecting together the outer (15A) and inner (15B) shells of the intermediate casing (15),
wherein the exhaust casing (24) comprises an outer shell (24A), an inner shell (24B) defining a hub of the exhaust casing, and structural arms (24C) connecting together the outer (24A) and inner (24B) shells of the exhaust casing (24),
in which the inlet casing (12) and the low pressure compressor (14) define an air inlet channel of the turbojet, which divides downstream of the low pressure compressor (14) into a primary flow channel passing through the high pressure spool, and into a secondary flow channel (29) extending around the primary flow channel,
and in which the low pressure shaft (A2) is supported by:
- a first bearing (130) borne by the inlet casing (12), the first bearing (130) being a roller bearing,
- a second bearing (32) borne by the intermediate casing (15), and
- a third bearing (34) borne by the exhaust casing (24),
**characterized in that** the low pressure shaft (A2) is further supported by an additional bearing (50) borne by the intermediate casing (15) and arranged between the first bearing (130) and the second bearing (32),
and **in that** the additional bearing (50) is a ball bearing.

2. Turbojet according to claim 1, in which the first bearing (130) is arranged at an upstream end of the low pressure shaft (A2).

3. Turbojet according to claim 1 or 2, in which the first bearing (130) is arranged radially facing the inlet casing (12).

4. Turbojet according to any one of claims 1 to 3, in which the first bearing (130) is arranged radially facing an upstream end of the low pressure compressor (14).

5. Turbojet according to any one of claims 1 to 4, in which the second bearing (32) is a roller bearing.

6. Turbojet according to any one of claims 1 to 5, in which the second bearing (32) is arranged radially facing the intermediate casing (15).

7. Turbojet according to any one of claims 1 to 6, in which the second bearing (32) is arranged radially facing a junction between the low pressure compressor (14) and the intermediate casing (15).

8. Turbojet according to any one of claims 1 to 7, in which the third bearing (34) is a roller bearing.

9. Turbojet according to any one of claims 1 to 8, in which the additional bearing (50) is arranged radially facing the low pressure compressor (14).

10. Turbojet according to any one of claims 1 to 9, in which the high pressure spool comprises a high pressure compressor (16) and a high pressure turbine (20) arranged downstream of the high pressure compressor (16),
in which the high pressure compressor (16) comprises a high pressure compressor rotor (16A), and the high pressure turbine (20) comprises a high pressure turbine rotor (20A) connected to the high pressure compressor rotor by a high pressure shaft (A1),
and in which the high pressure shaft (A1) is supported by a fourth bearing (42) borne by the intermediate casing (15) and a fifth bearing (44) interposed between the high pressure shaft (A1) and the low pressure shaft (A2) and arranged downstream of the fourth bearing (42) and upstream of the third bearing (34).

11. Turbojet according to claim 10, in which the fourth bearing (42) is a ball bearing.

12. Turbojet according to claim 10 or 11, in which the fifth bearing (44) is a roller bearing.
